# EUROPEAN PATENT APPLICATION

(11) **EP 1 883 169 A1**
(43) Date of publication of application: **30.01.2008**
(21) Application number: 06766950.7
(22) Date of filing: 20.06.2006
(51) Int. Cl.: H04B 7/08, H04J 11/00, H04L 27/38

(54) **DIVERSITY COMBINING METHOD AND DIVERSITY RECEIVER APPARATUS**

(30) Priority: 21.06.2005 JP 2005180101
(71) Applicant: MATSUSHITA ELECTRIC INDUSTRIAL CO., LTD., Osaka 571-8501 (JP)
(72) Inventor: TANIGUCHI, Tomohiko c/o Matsushita Electric Industrial Co. Ltd, Shiromi, Chuo-ku, Osaka-shi, Osaka 540-6207 (JP); KISODA, Akira c/o Matsushita Electric Industrial Co. Ltd, Shiromi, Chuo-ku, Osaka-shi, Osaka 540-6207 (JP)
(74) Representative: Pautex Schneider, Nicole Véronique
(86) International application number: PCT/JP2006/312289
(87) International publication number: WO 2006/137382

(57) **Abstract**

In a diversity receiving apparatus for demodulating a plurality of signals received with a plurality of antennas and performing signal demodulation using the demodulated signals of the same number as that of the antennas, first combiner combines the plurality of received signals once, and hard detecting unit makes a hard detection of the combined result to thus compute a plausible code point. Propagation path re-estimators compute propagation path characteristics of high estimating accuracy by using this plausible code point, and divide the demodulated signals of the same number as the antennas by the obtained propagation path characteristics. Second combiner again combines the results to thereby achieve a highly reliable result of demodulation.

## Description

### TECHNICAL FIELD

The present invention relates to a technique of making diversity reception of a data signal sequence modulated by the digital multilevel modulation method.

### BACKGROUND ART

A diversity receiving system is used frequently for television receivers installed in automobiles, portable telephones, and the like apparatuses for the purpose of receiving terrestrial broadcasting waves steadily even while moving.

Some of the techniques proposed as the diversity receiving system include a space diversity system, time diversity system, frequency diversity system and polarization diversity system. Generally, the space diversity system is the one often used for the purpose of improving receiving performances of the terrestrial broadcasting waves since the system can be implemented by changing only a receiver configuration at the receiving side so as to use the limited frequency spectrum effectively.

In the case of receiving an analog television broadcast in a moving vehicle, for example, the space diversity receiving system has been put to practical use, in which the system employs a plurality of antennas mounted to the vehicle for selecting an input signal having a largest signal level from among a plurality of receiving signals.

On the other hand, digitalization of the broadcasting is currently being promoted in number of regions in the world. In Japan and Europe, for instance, a transmission method called Orthogonal Frequency Division Multiplexing (hereinafter referred to as "OFDM") has been adopted as the method for terrestrial digital television broadcasting.

In addition, the transmission data to be OFDM modulated and transmitted are source-coded based on a data coding scheme such as MPEG2, for example.

The signal is put to a process of error correction upon the reception to improve a tolerance to receiving errors. It is also possible to improve the tolerance to errors by changing the career modulation method to another modulation method of a better tolerance. For example, a noise resistance characteristic of the signal can be improved by changing the career modulation method from the one called 64QAM (i.e., Quadrature Amplitude Modulation) to another called 16QAM, although this decreases a data rate of the transmitted signal.

The above method can make it possible to receive images and sounds with less interferences when a digital television broadcast is viewed and listened inside a vehicle or the like while moving, as compared to the conventional analog television broadcast.

Details of the transmission method for the terrestrial digital television broadcasting in Japan are described in a standard published by the Association of Radio Industries and Businesses, titled "Transmission System for Terrestrial Digital Television Broadcasting", ARIB STD-B31, Version 1.1, Chapter 2 "ISDB-T Overview", p. 8, lines 2 to 9 (hereinafter referred to as "Non-patent document 1").

It is also possible to further reduce frequency of interferences that occur in the reception while moving by adapting the space diversity receiving system for the OFDM-modulated signals discussed above.

As one example of the space diversity receiving system, there has been proposed a method, in which signals are selected or combined on an OFDM career basis of the OFDM-modulated signals. This system uses a plurality of antennas for receiving the signals, and performs processes of analog-to-digital conversion, synchronous detection, fast Fourier transform ("FFT") operation and demodulation individually for each of the plurality of received signals. The system thus produces a signal consisting of a number of OFDM careers for each of the signals received with the plurality of antennas. It then takes a process of using either an optimum signal selected among those signals received with the plurality of antennas, or a signal produced by combining those received with the plurality of antennas, for each of the OFDM careers.

In the case of selecting the one optimum signal, as discussed above, power levels of the OFDM careers may be used, for instance, as a criterion of the selection. In other words, power levels of the individual OFDM careers are compared to select the one having the largest level.

Or, in the case of combining the signals, weighting values are computed to the plurality of received signals for every OFDM career, and the signals are added together according to ratios computed using the weighting values. This provides a highly effective improvement of the receiving characteristic if a method called the maximal ratio combining diversity receiving scheme is employed in this case, in which the signals are weighted according to the ratios of the power levels of the individual OFDM careers, since it can reduce the signal-to-noise ratio to the smallest level. Details of the maximal ratio combining diversity receiving scheme are described in the paper "Linear diversity combining techniques" by D. G. Brennan, Proc. IRE, 47, pp 1075 to 1102, June 1959 (hereinafter called "Non-patent document 2").

Although what has been described above is the method of selecting or combining the plurality of received OFDM signals for every OFDM career, there is also proposed another technique of the space diversity reception, in which the signals are combined at a preceding stage of the analog to digital conversion. This technique is disclosed in Japanese Patent Unexamined Publication, No. 2001-156689, for example (hereinafter referred to as "Patent document 1").

Now, when adopting the method of weighting and combining the plurality of received signals individually after performing the processes of analog to digital conversion, synchronous detection, fast Fourier transform operation and demodulation, as has been described, the weighted and combined signals can be made better quality the higher the signal quality is throughout the stages up to demodulation.

For instance, Japanese Patent Unexamined Publication, No. 2004-96703 (referred to as "Patent document 2") discloses one of the well known techniques of improving the signal quality in the process of demodulation. In patent document 2, what is shown are processes of estimating a propagation path characteristic by using scattered pilot signals included in the OFDM modulated signals, and calculating a received signal point by using the propagation path characteristic obtained as a result of the estimation. A data of the received signal point is hard-detected, and the result is fed back to an arithmetic unit for the propagation path characteristic to improve an accuracy of the propagation path estimation.

More specifically, it includes the processes of estimating propagation path characteristic H by interpolating the scattered pilot signals, performing a complex division by dividing received signal Y after fast Fourier transform operation by the propagation path characteristic H, obtaining mapping vector X by making hard detection, and performing another complex division thereafter by dividing the received signal Y by the value X to obtain propagation path characteristic H'. After determination that propagation path characteristic H' is reliable, the previously computed propagation path characteristic H is replaced with the characteristic H', and the processes of interpolation and complex division are repeated to reproduce mapping vector X'.

In order to improve a receiving performance of the OFDM modulated signals, it is effective to employ the diversity receiving system, as discussed above, which receives a plurality of signals with a plurality of antennas, demodulates the plurality of signals individually, and select or weight and combine the demodulated signals of the same number as the antennas on an OFDM career basis. This is because of the possibility that a data lost in a demodulated signal received from one antenna may be included in another demodulated signal of the other antenna, by virtue of using the plurality of signals.

In the case of the diversity receiving system for selecting or weighting and combining the plurality of obtained OFDM signals on the OFDM career basis after demodulating them individually, the individual signals are processed separately up to the demodulation stage. During the process of demodulation, a complex signal obtained through frequency conversion of the OFDM signal is divided by a separately estimated propagation path characteristic to compute a code point.

There is a possibility at this time that an estimation error can occur in the propagation path characteristic, which in turn results in an error in data of the code point obtained by dividing the signal by the propagation path characteristic having the error. The conventional diversity receiving system is aimed at improving accuracy of the calculation of the code point by means of obtaining data of a plurality of code points having errors, and either selecting or combining them to offset these errors with each other.

In the technique disclosed in the patent document 2, however, there is a limitation in improvement of the receiving characteristics of individual demodulating units and therefore the performance of diversity reception due to the vulnerability to such errors as making hard detection on a code point different from the proper transmission code point when the received signal point is at a great distance away from the transmission code point.

### SUMMARY OF THE INVENTION

A diversity receiving apparatus of the present invention has a function of hard-detecting a received signal obtained by combining a plurality of received signals, and calculating a propagation path characteristic again based on a result of the hard detection. In the next step, it computes a propagation path characteristic once again for each of the plurality of received signals by using the result of the hard detection and data of the received signals. It then combines results obtained by dividing the received signals by using re-computed propagation path characteristics, and outputs a combined signal after subjecting it to processes of de-interleaving and error correction.

According to the above processes, the apparatus compensates data of the received signal by once combining the plurality of received signals and computes the propagation path characteristic again based on the result, thereby improving demodulation performances of the individual demodulators. The apparatus can further improve its demodulation performance substantially by combining the results of improvement in the demodulation performances of the individual demodulators.

### BRIEF DESCRIPTION OF DRAWINGS

Fig. 1 is a block diagram showing a configuration of a diversity receiving apparatus according to a first exemplary embodiment of the present invention;
Fig. 2 is a block diagram showing a configuration of a demodulator according to the first exemplary embodiment of the invention;
Fig. 3 is a graphic chart showing an example of mapping rules of a transmission signal when OFDM signals are career modulated with 16QAM modulation signal according to the first exemplary embodiment of the invention;
Fig. 4 is a graphic chart showing an example constellation of a transmission signal and a complex signal obtained by a first combiner when signals are transmitted according to the mapping rule shown in Fig. 3, in the first exemplary embodiment of the invention;
Fig. 5 is a block diagram showing a configuration of a propagation path re-estimator according to the first exemplary embodiment of the invention;
Fig. 6 is a block diagram showing a configuration of a diversity receiving apparatus according to a second exemplary embodiment of the present invention;
Fig. 7 is a block diagram showing a configuration of a propagation path re-estimator according to the second exemplary embodiment of the invention;
Fig. 8A is a graphic chart indicating a condition of signal amplitudes before being corrected by a compensator according to the second exemplary embodiment of the invention;
Fig. 8B is another graphic chart indicating the condition of signal amplitudes after corrected by the compensator according to the second exemplary embodiment of the invention;
Fig. 9 is a block diagram showing a configuration of a diversity receiving apparatus according to a third exemplary embodiment of the present invention;
Fig. 10 is a diagram illustrating flows of signals according to the third exemplary embodiment of the invention;
Fig. 11 is a block diagram showing a configuration of a diversity receiving apparatus according to a fourth exemplary embodiment of the present invention;
Fig. 12 is a graphic chart showing an example of constellation of mapping points of transmission signals and signal points of received signals obtained as a result of combining according to the fourth exemplary embodiment of the invention;
Fig. 13 is a graphic chart illustrating an example of method for determining reliability according to the fourth exemplary embodiment of the invention; and
Fig. 14 is a block diagram showing a configuration of a diversity receiving apparatus according to a fifth exemplary embodiment of the present invention.

### REFERENCE MARKS IN THE DRAWINGS

- 101a, 101b: antenna
- 102a, 102b: tuner
- 103a, 103b: A/D converter
- 104a, 104b: orthogonal detector
- 105a, 105b: frequency converter
- 106a, 106b: demodulator
- 107: first combiner
- 108: hard detecting unit
- 109a, 109b: propagation path re-estimator
- 110: second combiner
- 111: de-interleaver
- 112: de-mapper
- 113: bit de-interleaver
- 114: error compensator
- 115: first combiner
- 116a, 116b: propagation path re-estimator
- 117: combiner
- 118: first combiner
- 201a: SP signal extractor
- 202a: SP signal generator
- 203a: first complex divider
- 204a: interpolator
- 205a: delay element
- 206a: second complex divider
- 207a: third complex divider
- 208a: frequency axis filter
- 209a: fourth complex divider
- 210a: compensator

### DETAILED DESCRIPTION OF PREFERRED EMBODIMENTS

### FIRST EXEMPLARY EMBODIMENT

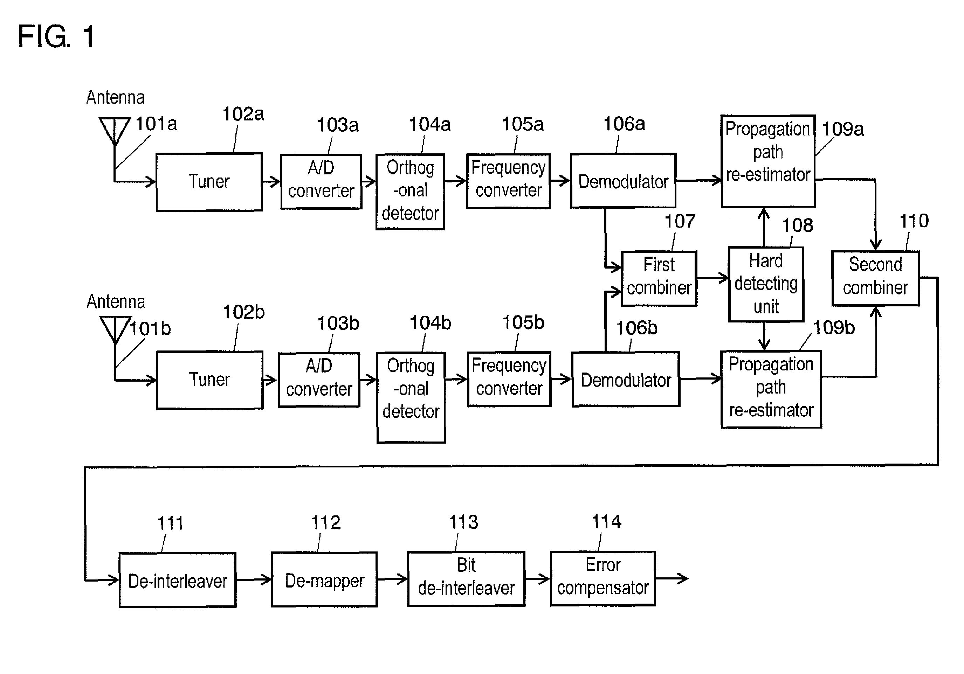

Referring now to Fig. 1 to Fig. 5, description is provided of an example configuration of an apparatus which materializes a diversity receiving system according to the first exemplary embodiments of the present invention. Fig. 1 is a block diagram showing a configuration of a diversity receiving apparatus according to the first exemplary embodiment of this invention. In Fig. 1, the diversity receiving apparatus of the first exemplary embodiment comprises antennas 101a and 101b, tuners 102a and 102b, A/D converters 103a and 104b, orthogonal detectors 104a and 104b, frequency converters 105a and 105b, demodulators 106a and 106b, first combiner 107, hard detecting unit 108, propagation path re-estimators 109a and 109b, second combiner 110, de-interleaver 111, de-mapper 112, bit de-interleaver 113 and error compensator 114. Here, antennas 101a and 101b differ from each other at least in one aspect of their mounted locations and characteristics.

In this first exemplary embodiment, description is provided as an example of a configuration having two systems, each consisting of components from an antenna to a demodulator and a propagation path re-estimator. However, it is also possible to compose an apparatus having more than two systems of antenna to demodulator and propagation path re-estimator, such as a structure provided with four systems, each consisting of an antenna to a demodulator and a propagation path re-estimator.

The diversity receiving apparatus operates in a manner, which is described hereinafter, by using an example of receiving OFDM-modulated signals according to Japanese standard for terrestrial digital television broadcasting.

Antenna 101a converts broadcasting waves transmitted from a broadcasting station into electrical signals and outputs them. Tuner 102a selects a signal of a specific frequency band out of the signals received from antenna 101a, and converts it into a signal of a base-band or a given frequency band. A/D converter 103a converts an analog signal obtained from tuner 102a into a digital signal. Orthogonal detector 104a detects an OFDM transmission signal, and performs a calculation and correction of a frequency error between the transmission signal and a frequency reference signal provided by a demodulator. Orthogonal detector 104a also computes a time duration of frequency OFDM symbol as well as a time duration of guard interval, and outputs a signal of the time duration of OFDM symbol. Orthogonal detector 104a additionally determines a transmission mode of the OFDM transmission signal and a length of the time duration of guard interval.

Frequency converter 105a converts a time domain signal in the time duration of OFDM symbol into a frequency domain signal by performing a FFT process, for instance. Demodulator 106a demodulates a TMCC ("Transmission and Multiplexing Configuration and Control") signal inserted in the OFDM signal, and acquires data of various parameters of the OFDM transmission signal. Demodulator 106a also estimates a propagation path characteristic of the received signal by using the data of these parameters of the demodulated OFDM transmission signal, and completes the demodulation process of the received signal to a transmitted signal.

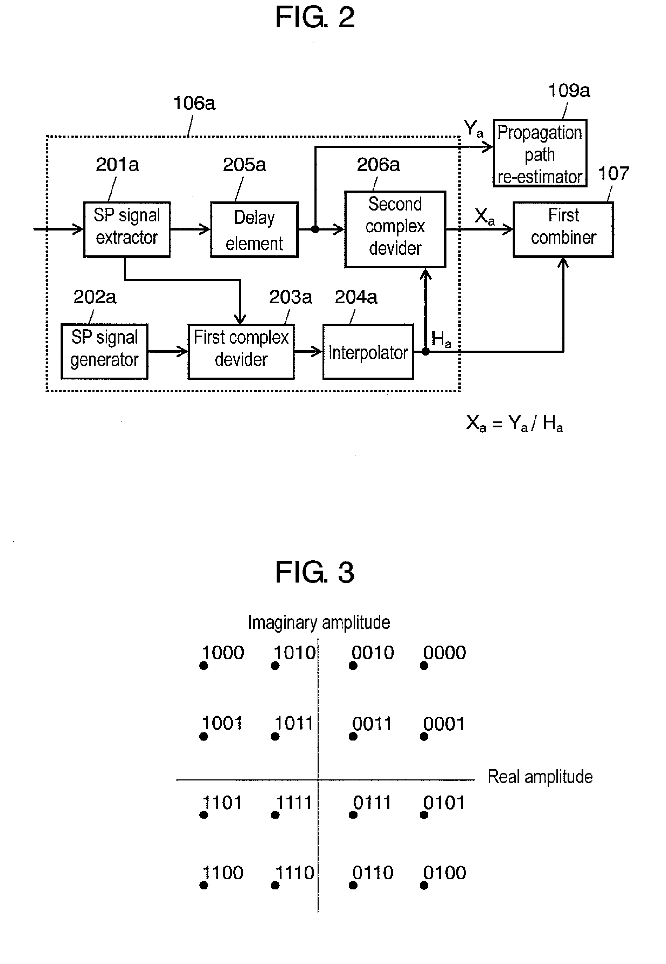

The method of estimating the propagation path characteristic and the demodulation process will be described in more detail by using Fig. 2, which is a block diagram showing a configuration of demodulator 106a according to the first exemplary embodiment of this invention. In Fig. 2, demodulator 106a comprises SP signal extractor 201a, SP signal generator 202a, first complex divider 203a, interpolator 204a, delay element 205a and second complex divider 206a. Propagation path re-estimator 109a and first combiner 107 are the same components as propagation path re-estimator 109a and first combiner 107 shown in Fig. 1.

SP signal extractor 201a extracts scattered pilot signals (hereinafter referred to as SP signal), which are arranged at regular intervals along the axes of frequency and time in the OFDM signal, from the signal of frequency domain obtained by frequency converter 105a. SP signal generator 202a generates a reference signal for the SP signals as a reference pilot signal containing known amplitude and phase.

First complex divider 203a performs a complex division of the SP signals extracted by SP signal extractor 201a by using the reference pilot signal generated by SP signal generator 202a. This complex division provides a propagation path characteristic of the OFDM career, wherein the SP signals are present, as a degree of deviations in both amplitude and phase, and it is output from first complex divider 203a.

Interpolator 204a interpolates the received signal in the directions along both time axis and frequency axis by using the propagation path characteristic obtained as a result of the above complex division, and outputs it. Interpolator 204a also computes and outputs estimated value Ha of the propagation path characteristic for all of OFDM careers. This is because the SP signals are arranged discretely in the directions of both the frequency axis and the time axis within the OFDM signal. Estimated value data Ha of the propagation path characteristics are output from interpolator 204a to second complex divider 206a and first combiner 107.

Delay element 205a gives a time delay on the signal of frequency domain obtained from frequency converter 105a. The purpose of this is to offset a difference in time necessary for the processes by first complex divider 203a and second interpolator 204a. Delay element 205a outputs delayed data Ya of the received signal to second complex divider 206a and propagation path re-estimator 109a.

Second complex divider 206a performs a complex division of data Ya of the received signal output from delay element 205a by the estimated value data Ha of the propagation path characteristic output from interpolator 204a. Complex signal Xa derived as a result of the complex division is output to first combiner 107.

As described above, demodulator 106a acquires various parameters of the OFDM transmission signal from the TMCC data inserted in the OFDM signal, and outputs the estimated value data Ha of the propagation path characteristic of the propagation path of the received OFDM signal, data Ya of the received signal, and data (complex signal) Xa which is the result of dividing the data Ya of the received signal representing a received signal point by the estimated value data Ha of the propagation path characteristic.

In Fig. 1, another system consisting of tuner 102b through demodulator 106b also operates in the same manner as the system of tuner 102a through demodulator 106a described above, and explanation of it is therefore skipped. Note that demodulator 106b outputs signals Hb, Yb and Xb corresponding respectively to signals Ha, Ya and Xa of demodulator 106a.

Description is provided next of how first combiner 107 operates. First combiner 107 receives input of complex signals Xa and Xb from demodulators 106a and 106b respectively. At the same time with complex signals Xa and Xb, first combiner 107 also receives power and amplitude data of OFDM careers, in which the complex signals Xa and Xb have been included.

First combiner 107 combines the complex signals Xa and Xb input from demodulators 106a and 106b. There is a possibility that the complex signals Xa and Xb to be input by demodulators 106a and 106b are not delivered in a timely manner when they are combined. For this reason, these complex signals Xa and Xb are once stored in a memory unit or the like, and simultaneously retrieved thereafter to synchronize the timing, if necessary. In this manner, first combiner 107 can combine the complex signals included in the same symbol time duration and the same OFDM careers.

When combining the signals, first combiner 107 adds together the signals after subjecting them to the weighting process based on the power and amplitude data of the OFDM careers, in which the complex signals Xa and Xb are included, by using the estimated value data Ha and Hb of the propagation path characteristics input from demodulators 106a and 106b. The receiving performance can be improved as a result. In this case, the above power and amplitude data may be given in quantized values.

In an example of given OFDM careers, in which complex signals Xa and Xb are obtained from demodulators 106a and 106b, assume that a power ratio of these OFDM careers is two to one (i.e., the power of complex signal Xa is larger than the power of complex signal Xb), then the complex signal Xa obtained from demodulator 106a is multiplied by 2/3, and the complex signal Xb obtained from demodulator 106b is multiplied by 1/3 before these two signals are added together.

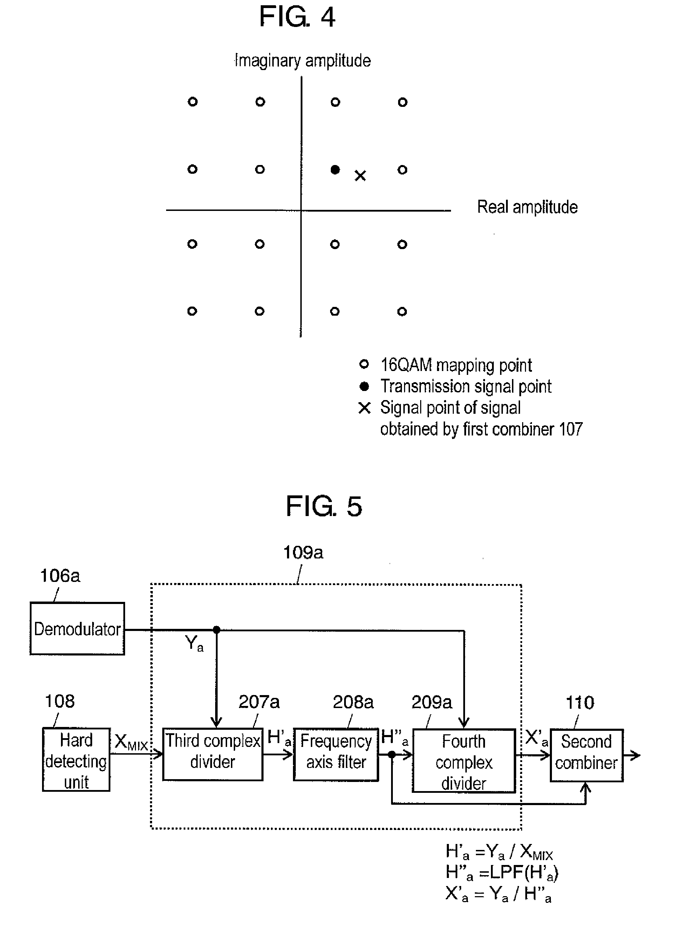

Hard detecting unit 108 makes a hard detection of the combined complex signal obtained from first combiner 107. The hard detection is to judge a mapping point nearest to the received signal point as a transmission signal point. Referring now to Fig. 3 and Fig. 4, description is provided of how the hard detection is made. Fig. 3 is a graphic chart showing an example of mapping rule of a transmission signal when OFDM signals are career modulated with 16QAM modulation signal according to this first exemplary embodiment of the invention, and Fig. 4 is a graphic chart showing an example constellation of a transmission signal and a complex signal obtained by first combiner 107 when the signals are transmitted according to the mapping rule shown in Fig. 3.

In Fig. 4, mapping points of the 16 QAM modulation signals, a transmission signal point and a signal point of the complex signal obtained by first combiner 107 are shown by the marks of ○, ● and × respectively. There are many cases that the received OFDM signals get noises in tuners 102a and 102b and the like components, and an error occurs in the estimation of a propagation path. It is for this reason that, in many cases, the transmission signal point and the signal point of the complex signal obtained through the components between antennas 101a and 101b to first combiner 107 do not match with each other, and an error (or deviation) appears between these two signal points, as shown in Fig. 4. The deviation between the transmission signal point and the complex signal point obtained from the combiner varies depending on a magnitude of the noises and an extent of the error in the estimation of the propagation path. Hard detecting unit 108 judges one of the mapping points nearest to the received signal point as the transmission signal point, and outputs data Xmix of the nearest mapping point to the signal point representing the complex signal computed in first combiner 107 to propagation path re-estimators 109a and 109b.

Propagation path re-estimators 109a and 109b estimate propagation paths again by using the signal points provided by data Ya and Yb of the received signals obtained from demodulators 106a and 106b and data Xmix of the signal point after the combining as obtained from hard detecting unit 108. This re-estimation process will be described hereinafter in more detail.

Fig. 5 is a block diagram showing a configuration of propagation path re-estimator 109a according to this first exemplary embodiment of the invention. In Fig. 5, propagation path re-estimator 109a comprises third complex divider 207a, frequency axis filter 208a and fourth complex divider 209a. Here, demodulator 106a, hard detecting unit 108 and second combiner 110 are the same components as demodulator 106a, hard detecting unit 108 and second combiner 110 shown in Fig. 1.

Third complex divider 207a performs a complex division of a complex signal of the signal point represented by data Ya of the received signal obtained from demodulator 106a by using the complex signal Xmix of the signal point after the combining as obtained from hard detecting unit 108. A propagation path characteristic H'a for each of the OFDM careers is thus computed, and it is output to frequency axis filter 208a. Note that since the transmission signal point of the careers containing the SP signals is already known, it may be computed again by complex-dividing with the known value, or the output of first complex divider shown in Fig. 2 may be used.

Frequency axis filter 208a provides a filtering process on the propagation path characteristic H'a input as a complex signal from third complex divider 207a. The filter used here may for instance be a low-pass filter. Frequency axis filter 208a outputs complex signal H"a resulted from the filtering process to fourth complex divider 209a and second combiner 110, as a re-estimation result of the propagation path characteristic.

Fourth complex divider 209a performs a complex division of the signal point represented by data Ya of the received signal obtained from demodulator 106a by using the re-estimation result H"a of the propagation path characteristic obtained from frequency axis filter 208a, and outputs a result of the division as complex signal X'a. It is necessary in this case to separately adjust a timing between the signal point represented by the data Ya of the received signal and the re-estimation result H"a of the propagation path characteristic in order to relate them to the same OFDM career.

As discussed above, propagation path re-estimator 109a outputs to second combiner 110 the complex signal X'a, or the result of the complex division (i.e., the result of complex-dividing the received signal by the propagation path characteristic) computed in fourth complex divider 209a. At the same time, propagation path re-estimator 109a also outputs to second combiner 110 the result H"a of the filtering process (i.e., the result of re-estimation of the propagation path characteristic) carried out in frequency axis filter 208a. The result H"a of the re-estimation of the propagation path characteristic of the complex signal computed in frequency axis filter 208a represents a transfer function of the propagation path. It is therefore possible to convert the transfer function obtained as a complex number into power and amplitude data and then quantize them before making output to second combiner 110.

Propagation path re-estimator 109b has the same configuration and function as that of propagation path re-estimator 109a, and details of which are therefore skipped. Propagation path re-estimator 109b generates complex signals H'b, H"b and X'b as the signals corresponding to the complex signals H'a, H"a and X'a generated in propagation path re-estimator 109a.

Referring back to Fig. 1, second combiner 110 operates in a manner which is described now. Second combiner 110 receives the complex signals X'a and X'b from propagation path re-estimators 109a and 109b respectively in the like manner as first combiner 107. At the same time, second combiner 110 also receives power and amplitude data of OFDM careers, in which the complex signals X'a and X"b have been included. Second combiner 110 combines the complex signals X'a and X'b input from demodulators 109a and 109b by using these data. When combining the complex signals X'a and X"b, second combiner 110 adds together these signals after subjecting them to a weighting process based on the power and amplitude data of the OFDM careers, in which the complex signals X'a and X'b are included, by using the re-estimated data H'a and H'b of the propagation path characteristics input from demodulators 106a and 106b. The receiving performance can be improved as a result. In this case, the above power and amplitude data may be given in quantized values.

De-interleaver 111 arranges the complex signals obtained from second combiner 110 into their proper sequence in the frequency and time. A method of arrangement is stipulated in advance, and the arrangement is made according to the method given by the transmitter's side. De-mapper 112 restores the transmitted bit data based on data provided with the complex signals obtained from de-interleaver 111. The restoration is made according to a method of modulation and demodulation of the OFDM careers containing the complex signals, and on the basis of data of amplitude and phase of the complex signals output by de-interleaver 111.

The restoration of the bit data is made on the assumption that a code sequence allocated to the nearest mapping point to the received signal point has been the transmission code sequence. When received OFDM signal is career-modulated by 16 QAM modulation, for instance, the bit data is restored according to the rule shown in Fig. 3. A signal of the 16QAM modulation can carry 4 bits of data per one career, and a signal of 64QAM modulation can carry 6 bits of data per one career.

When obtaining the nearest mapping point to the received signal point and restoring the transmission code sequence, it is possible to compute and use a reliability value of the restored bit data at the same time. This is called "maximum likelihood detection ". The reliability value is computed with consideration given to how far the received signal point is located away from the mapping point. It is also appropriate to use, as the reliability value, a value obtained by compensating a positional deviation between the received signal point and the mapping point based on the power of the OFDM career containing the signal.

The bit data is vulnerable to the influence of noise contained in the received signal if, for example, the power of the OFDM career containing the received signal is weak even when the deviation between the received signal point and the mapping point is small. In such a case, a risk becomes high that the reception point exists in the vicinity of another mapping point different from the actual transmission point. It is effective for this reason to make compensation by the power of the OFDM career containing the received signal. It is desirable in this case for propagation path re-estimators 109a and 109b to compute a power data of the OFDM career.

Following the above, bit de-interleaver 113 arranges the bit data output by de-mapper 112. The method of arrangement is stipulated in advance, and the arrangement is carried out by restoring the original constellation provided by the transmitter's side. Error compensator 114 performs an error correction by using the bit data sequence and reliability value of the individual bit data input from bit de-interleaver 113. A method of the error correction often used in this process is called Viterbi decoding, and it can be used frequently in combination with the Reed-Solomon correction code. However, the above shall not be considered as restrictive, and any other method is acceptable as long as it uses the above-said reliability value to make the error correction. The configuration discussed above achieves the restoration of the digital signal sequence based on the received OFDM signal.

Although what has been described in the first exemplary embodiment is the configuration provided with two systems comprising the components from antennas 101a and 101b to demodulators 106a and 106b and propagation path re-estimators 109a and 109b, this invention is also adaptable to other configurations having three or more systems, each comprising an antenna to a demodulator as well as a propagation path re-estimator. It is also feasible to standardize certain components of similar functions such as first combiner 107 and second combiner 110.

As described above, this invention can substantially improve the receiving performance in the diversity receiving system which combines the signals received with a plurality of antennas after demodulating them individually. In other words, the system computes the propagation path characteristic again for each of the plurality of received signals based on a result of hard detection made on the combined signal, by using the result of hard detection and a data of the received signals. In this way, the invention can improve accuracy of estimating the propagation path characteristic, and also improve the reliability of received signal data further by combining the result of dividing the received signal by the re-computed propagation path characteristic of high accuracy. As a consequence, the invention can achieve substantial improvement of the receiving performance.

In the first exemplary embodiment, although the description has been provided of the example adaptable for transmission method of OFDM and the digital modulation method of 16QAM mapping, this invention shall not be regarded as limited to this configuration. For instance, the transmission method can be of any type as long as it transmits multi career bearing pilot carriers, instead of limiting it only to the OFDM scheme. In addition, the modulation method can be of any method such as 8QAM, 32QAM, 64QAM, 256QAM, QPSK (i.e., Quadrature Phase Shift Keying), and the like.

In the above text, the individual structural components have been illustrated as being adapted to the diversity type combining apparatus by way of an example to embody the present invention. It should be understood, however, that the present invention can also cover a diversity combining method by replacing the functions provided by the individual structural components with the like steps of processing.

### SECOND EXEMPLARY EMBODIMENT

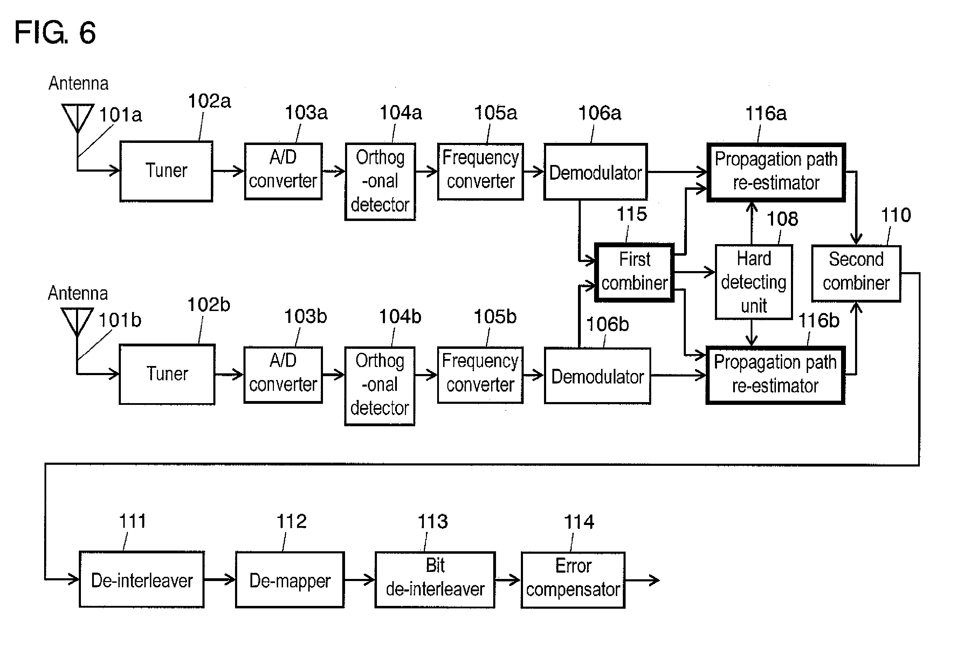

Referring to Fig. 6, Fig. 7, Fig. 8A and Fig. 8B, description is provided of an example configuration of an apparatus which materializes a diversity receiving system according to the second exemplary embodiments of the present invention. For a diversity receiving apparatus of this second exemplary embodiment, description is given of the example of which configuration is provided with two systems, each comprising components from an antenna to a demodulator.

Fig. 6 is a block diagram showing the configuration of the diversity receiving apparatus according to the second exemplary embodiment of this invention. This exemplary embodiment is so configured that first combiner 107 and propagation path re-estimators 109a and 109b of the above first exemplary embodiment are replaced with first combiner 115 and propagation path re-estimators 116a and 116b. Since all the structural components other than first combiner 115 and propagation path re-estimators 116a and 116b are identical to those of the first exemplary embodiment, their descriptions are excluded here.

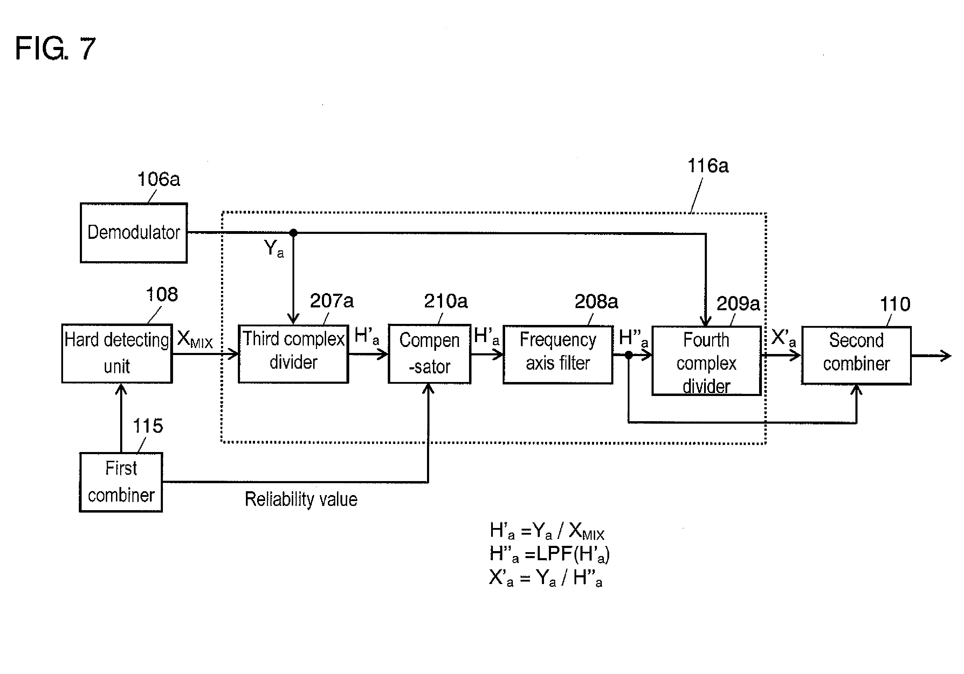

In addition, Fig. 7 is a block diagram showing a configuration of propagation path re-estimator 116a according to the second exemplary embodiment of this invention. Fig. 7 shows only demodulator 106a, first combiner 115, hard detecting unit 108, propagation path re-estimator 116a and second combiner 110 of Fig. 6, in addition to an internal configuration of propagation path re-estimator 116a.

Description is provided of how first combiner 115 and propagation path re-estimator 116a operate by referring to Fig. 7.

First combiner 115 combines data Xa and Xb of the received signals obtained from demodulators 106a and 106b, and outputs a combined complex signal to hard detecting unit 108 in the same manner as first combiner 107 in the first exemplary embodiment. At the same time, first combiner 115 determines reliability of a result of combining the plurality of complex signals.

The reliability of the combined result is computed by using a data of distance between the plurality of acquired complex signals. When there are two systems from the antennas to the demodulators, for example, first combiner 115 determines that the reliability is not established if a distance between two reception points of the acquired complex signals is larger than a distance between code points of the modulated signals. The reason of this is because first combiner 115 is unable to determine which of the two signals indicates the correct result since mapping points nearest to the individual received signals do not agree even though the receives signals are originally identical.

In addition, it is also effective to compute a distance between the reception points of the complex signals for every OFDM career, calculate and store a mean value of the distances between the reception points for a predetermined time period, and use the data to improve accuracy of the reliability determination. Any OFDM career that shows a larger mean value of the distances between the reception points as compared with other OFDM careers is determined as being adversely influenced by some interference signals, and it is therefore judged to be low in the reliability.

Referring to Fig. 7, further details are described of the function of utilizing the above result of the reliability judgment, along with the internal configuration of propagation path re-estimator 116a. As shown in Fig. 7, propagation path re-estimator 116a comprises third complex divider 207a, compensator 210a, frequency axis filter 208a and fourth complex divider 209a. This configuration differs in respect that it is provided with compensator 210a as compared to propagation path re-estimator 109a illustrated in Fig. 5 of the first exemplary embodiment.

Third complex divider 207a in propagation path re-estimator 116a makes a complex division by dividing data Ya (i.e., complex signal) of the received signal point obtained from demodulator 106a by data Xmix (i.e., complex signal) of the signal point after the combining as obtained from hard detecting unit 108. A propagation path characteristic H'a for each of the OFDM careers is thus computed. Note that since the transmission signal point of the careers containing SP signals is already known, it can be re-computed again by complex-dividing with this known value, or the output of the first complex divider shown in Fig. 2 may as well be used.

Compensator 210a receives an input of the propagation path characteristic H'a (i.e., complex signal) from third complex divider 207a, as well as an input of reliability data computed in first combiner 115. The reliability data shows presence or absence of reliability for each of the OFDM careers. When the received signal is judged as having reliability for any of the OFDM careers, compensator 210a determines the complex signal H'a obtained from third complex divider 207a as being reliable, and outputs it as is to frequency axis filter 208a. On the other hand, when the received signal is judged as not having reliability for any of the OFDM careers, compensator 210a does not use the complex signal H'a obtained from third complex divider 207a but replaces it with another value obtained by interpolation of values belonging to the adjacent OFDM careers.

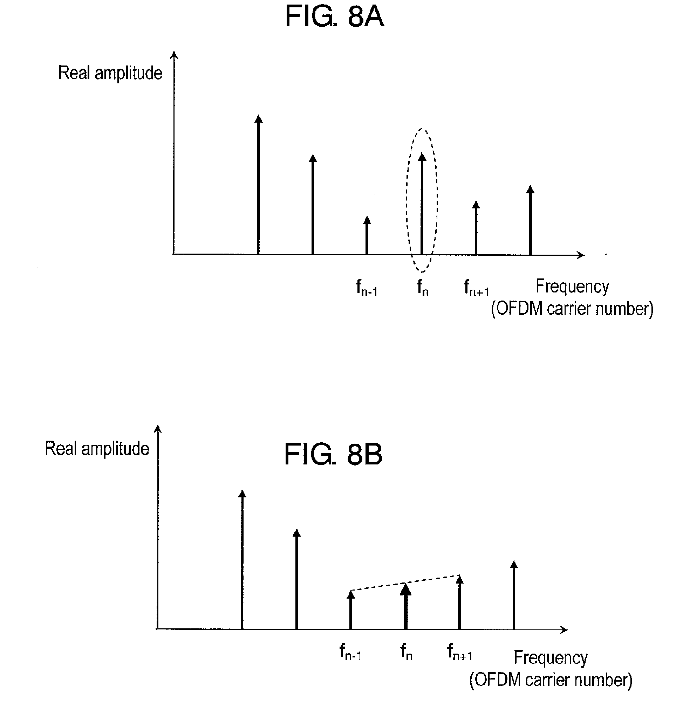

A concrete example is shown in Fig. 8A and Fig. 8B. Fig. 8A is a graphic chart indicating a condition of signal amplitudes before being corrected by compensator 210a according to the second exemplary embodiment of this invention, and Fig. 8B is a graphic chart indicating another condition of signal amplitudes after corrected by compensator 210a according to the second exemplary embodiment of this invention. The ordinate and the abscissa of these graphs represent amplitude and OFDM career number respectively.

It is assumed here that first combiner 115 has judged nth OFDM career (shown by frequency fn) in Fig. 8A as having low reliability. At this time, compensator 210a carries out a process of interpolating a value produced from complex signals of the (n-1)th OFDM career and the (n+1)th OFDM career before and after the nth OFDM career, and output it as a value of the nth OFDM career, as shown in Fig. 8B. While Fig. 8A and Fig. 8B show the example of real parts of the complex signals, the same process is also performed on imaginary parts.

Compensator 210a performs a similar process when there are a series of OFDM careers that are judged as being not reliable. In other words, compensator 210a replaces complex signals of the OFDM careers, which are judged as not reliable, with values produced by interpolation of the complex signals at both sides of these unreliable careers, and output them.

Referring back to Fig. 7, explanation is provided furthermore. Frequency axis filter 208a provides a filtering process on the complex signals output from compensator 210a, and outputs them. The filter used here may for instance be a low-pass filter. Frequency axis filter 208a outputs complex signal H"a resulted from the filtering process (i.e., a result of estimating the propagation path characteristic) to fourth complex divider 209a and second combiner 110.

Fourth complex divider 209a performs a complex division of data Ya of the received signal obtained from demodulator 106a by using the re-estimation result H"a of the propagation path characteristic obtained from frequency axis filter 208a, and outputs a result of the division as complex signal X'a.

As discussed above, propagation path re-estimator 116a outputs to second combiner 110 the complex signal X'a, or the result of the complex division (i.e., the result of complex-dividing the received signal by the propagation path characteristic), computed in fourth complex divider 209a. Propagation path re-estimator 116a also outputs to second combiner 110 the complex signal H"a, or the result of the filtering process performed in frequency axis filter 208a. The complex signal H"a computed in frequency axis filter 208a represents a transfer function of the propagation path. It is therefore possible to convert the transfer function obtained as a complex number into power and amplitude data and then quantize them before making output to second combiner 110.

Propagation path re-estimator 116b has quite the same configuration and function as those of propagation path re-estimator 116a, and details of which are therefore skipped. In the second exemplary embodiment, although what has been described is the configuration provided with two systems comprising the components from the antennas to the demodulators and the propagation path re-estimators, this invention is also adaptable to other configurations having three or more systems, each comprising an antenna to a demodulator as well as a propagation path re-estimator.

According to the above configuration, this invention can substantially improve the receiving performance in the diversity receiving system which combines the signals received with a plurality of antennas after demodulating them individually. In other words, the system computes the propagation path characteristic again for each of the plurality of received signals based on a result of hard detection made on the combined signal by using the result of hard detection and data of the received signals. In this way, the invention can improve accuracy of estimating the propagation path characteristic, and also improve the reliability of received signal data further by combining the result of dividing the received signal by the re-computed propagation path characteristic of high accuracy. As a consequence, the invention can achieve substantial improvement of the receiving performance.

Moreover, since the first combiner uses the data obtained by combining the signals to make determination of the reliability of the signals, the reliability data can be reflected upon the propagation path characteristic to be re-estimated. The propagation path characteristic of the OFDM career having low reliability is computed by interpolation with the propagation path characteristics of the adjacent OFDM careers having high reliability. It thus becomes possible to achieve the diversity receiving apparatus of high reliability.

In the second exemplary embodiment, although the description has been provided of the example adaptable for transmission method of OFDM and the digital modulation method of 16QAM mapping, this invention shall not be regarded as limited only to the above configuration. For instance, the transmission method can be of any type as long as it transmits multi career bearing pilot carriers, instead of limiting it only to the OFDM scheme. In addition, the modulation method can be of any method such as 8QAM, 32QAM, 64QAM, 256QAM, QPSK, and the like.

In the above text, the individual structural components have been illustrated as being adapted to the diversity type combining apparatus by way of an example to embody the present invention. It should be understood, however, that the present invention can also cover a diversity combining method by replacing the functions provided by the individual structural components with the like steps of processing.

### THIRD EXEMPLARY EMBODIMENT

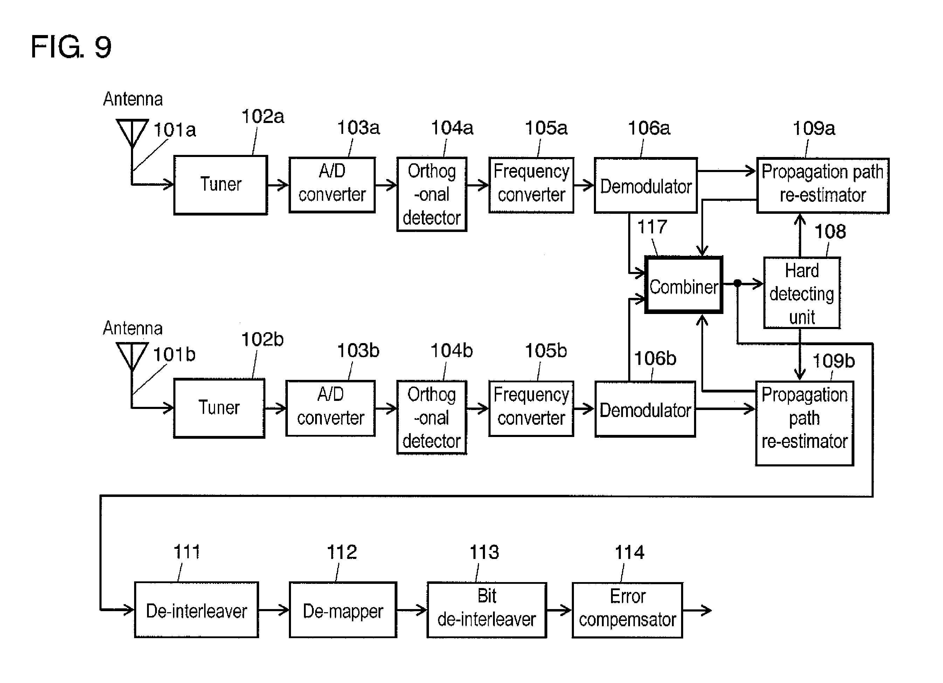

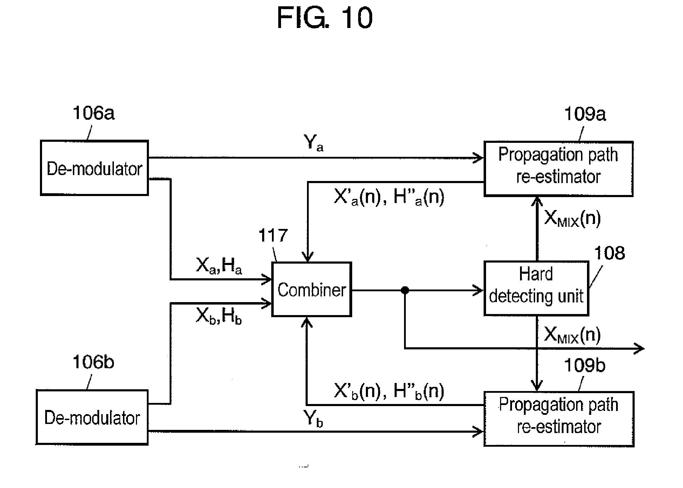

Referring to Fig. 9 and Fig. 10, description is provided of an example configuration of an apparatus which materializes a diversity receiving system according to the third exemplary embodiments of the present invention. For a diversity receiving apparatus of this third exemplary embodiment, description is given of the example of which configuration is provided with two systems, each comprising components from an antenna to a demodulator.

Fig. 9 is a block diagram showing an example configuration of the diversity receiving apparatus according to the third exemplary embodiment of this invention. This third exemplary embodiment is so configured that first combiner 107 and second combiner 110 of the above first exemplary embodiment are replaced with combiner 117. Since all the structural components other than combiner 117 are identical to those of the first exemplary embodiment, their descriptions will be skipped.

Combiner 117 in Fig. 9 differs, as compared with first combiner 107 of Fig. 1, in respects that it receives signals from propagation path re-estimators 109a and 109b, and it outputs to de-interleaver 111 the same signal it outputs to hard detecting unit 108. A configuration of propagation path re-estimator 109a is generally analogous to the corresponding one shown in Fig. 5. However, second combiner 110 in Fig. 5 is changed here to read as combiner 117.

Combiner 117 operates in a manner which is described hereinafter. Combiner 117 receives inputs of complex signals individually from demodulators 106a and 106b. At the same time with these complex signals, combiner 117 also receives power and amplitude data of OFDM careers, in which the corresponding complex signals have been included. Combiner 117 then combines the complex signals obtained from demodulators 106a and 106b.

There is a possibility that the complex signals to be input from demodulators 106a and 106b are not delivered at once in a timely manner at the time of combining them. These signals are therefore stored once in a memory unit or the like, and they are simultaneously retrieved thereafter to synchronize the timing, if necessary. In this manner, combiner 117 can combine the signals contained in the same symbol time duration and the same OFDM careers. A method of weighting the signals during combining is analogous to that of the first exemplary embodiment, and the details are therefore skipped.

Fig. 10 is a diagram illustrating flows of signals according to the third exemplary embodiment of the invention. A configuration of propagation path re-estimator 109a in Fig. 10 is generally similar to that shown in Fig. 5-Combiner 117 receives any of a power data and an amplitude data of the OFDM career as a result of converting output H"a (i.e., an estimated result of the propagation path characteristic) of frequency axis filter 208a shown in Fig. 5 and complex signal X'a, which is an output of fourth complex divider 209a in Fig. 5, from propagation path re-estimator 109a. Likewise. combiner 117 also receives equivalent signals as those of propagation path re-estimator 109a from propagation path re-estimator 109b.

Combiner 117 weights and combines the complex signals X'a and X'b obtained from propagation path re-estimators 109a and 109b. A method of the weighting and combining is same as the method used when first combiner 115 shown in Fig. 6 combines the signals obtained from demodulators 106a and 106b. However, combiner 117 receives the complex signals X'a and X'b used for the combining, and the data of amplitude or power (generated by converting H'a and H'b) for computing weighting ratios used in the combining process from propagation path re-estimators 109a and 109b, which are different from the example configuration of Fig. 6. By virtue of the above configuration, this exemplary embodiment enables the single combiner 117 to perform the weighting and combining processes, which are carried out by both first combiner 107 and second combiner 110 in the case of Fig. 1.

In this third exemplary embodiment, the configuration is also capable of performing processes described below in addition to the above processes. In the first exemplary embodiment discussed with Fig. 1, hard detecting unit 108 performs hard detection of the signals obtained from the plurality of demodulators 106a and 106b by using the resultant signal combined by first combiner 107. Furthermore, second combiner 110 combines again the complex signals computed and output from propagation path re-estimators 109a and 109b by using the results of hard detection obtained from hard detecting unit 108 and the frequency-converted complex signals obtained from the individual demodulators 106a and 106b.

In this third exemplary embodiment, the results processed through combiner 117, hard detecting unit 108 and propagation path re-estimator 109a are returned again to combiner 117. Because of this configuration, the complex signal obtained from propagation path re-estimator 109a, for instance, can be returned back to propagation path re-estimator 109b after combining and inputting to hard detecting unit 108. In this manner, the embodiment can apply the same processes repeatedly on the complex signals input from demodulators 106a and 106b.

Estimation accuracy of the propagation path characteristics computed by propagation path re-estimators 109a and 109b can be improved gradually by making the processes repeatedly. As a result, any adverse influence due to estimation errors of the propagation path characteristics are removed from the signals combined by combiner 117. The number of processing to be repeated can be set to five times, for instance, so that the output of combiner 117 is passed on to the subsequent stage of de-interleaver 111 after the processing is repeated five times.

In this third exemplary embodiment, reliability data of the signals can be computed in combiner 117, and used by propagation path re-estimators 109a and 109b in the like manner as described in the second exemplary embodiment.

In the third exemplary embodiment, although the description has also been provided of the example adaptable for transmission method of OFDM and the digital modulation method of 16QAM mapping, this invention shall not be regarded as limited to this configuration. For instance, the transmission method can be of any type as long as it transmits multi career bearing pilot carriers, instead of limiting it only to the OFDM scheme. In addition, the modulation method can be of any method such as 8QAM, 32QAM, 64QAM, 256QAM, QPSK, and the like.

In the above text, the individual structural components have been illustrated as being adapted to the diversity type combining apparatus by way of an example to embody the present invention. It should be understood, however, that the present invention can also cover a diversity combining method by replacing the functions provided by the individual structural components with the like steps of processing.

### FOURTH EXEMPLARY EMBODIMENT

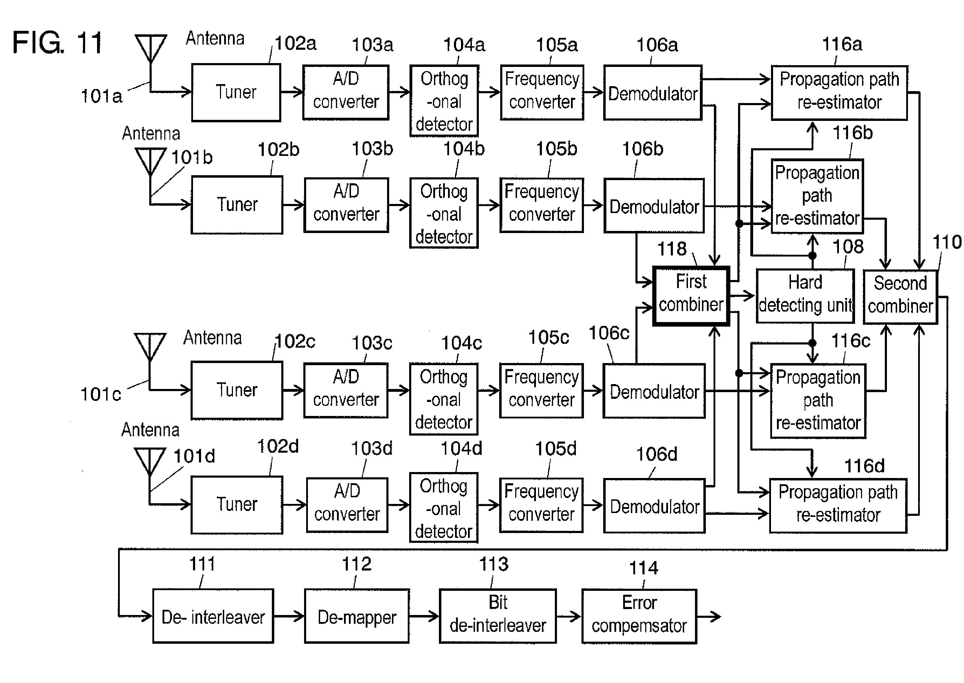

Referring to Fig. 11 to Fig. 13, description is provided of an example configuration of an apparatus which materializes a diversity receiving system according to the fourth exemplary embodiments of the present invention. For a diversity receiving apparatus of this fourth exemplary embodiment, description is given of the example of which configuration is provided with four systems, each comprising components from an antenna to a demodulator.

Fig. 11 is a block diagram showing an example configuration of the diversity receiving apparatus according to the fourth exemplary embodiment of this invention. This fourth exemplary embodiment is so configured that first combiner 115 of the above second exemplary embodiment is replaced with first combiner 118. While the second exemplary embodiment illustrates the example handling signals in two systems, one from antenna 101a to propagation path re-estimator 116a, and the other from antenna 101b to propagation path re-estimator 116b, this fourth exemplary embodiment carries signals in four systems, from antenna 101c to propagation path re-estimator 116c, and from antenna 101d to propagation path re-estimator 106d, beside those from antenna 101a to propagation path re-estimator 116a, and from antenna 101b to propagation path re-estimator 116b, an example of which will now be described.

Since all the structural components other than first combiner 118 are identical to those of the second exemplary embodiment, their descriptions will be skipped in this exemplary embodiment. First combiner 118 combines data Xa, Xb, Xc and Xd of the received signals obtained from demodulators 106a, 106b, 106c and 106d, and outputs a combined complex signal to hard detecting unit 108 in the same manner as first combiner 115 in the second exemplary embodiment shown in Fig. 6.

In addition, first combiner 118 determines reliability of a result of combining the plurality of complex signals. In the second exemplary embodiment, the reliability of the combining result is computed by using the data of distance between the plurality of complex signals input to it. In this fourth exemplary embodiment, on the other hand, first combiner 118 hard-detects each of signals Xa, Xb, Xc and Xd input from demodulator 106a, 106b, 106c and 106d respectively. First combiner 118 then judges that the reliability of the signal obtained by combining Xa, Xb, Xc and Xd as being high, when all of the plurality of hard detection results are in agreement to one another. Or, first combiner 118 may instead judge the reliability as being low if all of the plurality of hard detection results are different from one another. Alternatively, first combiner 118 may judge the reliability as being high when the results of hard detection on all of four signals are in agreement, or when the results of hard detection on three of the four signals are in agreement, if four are provided.

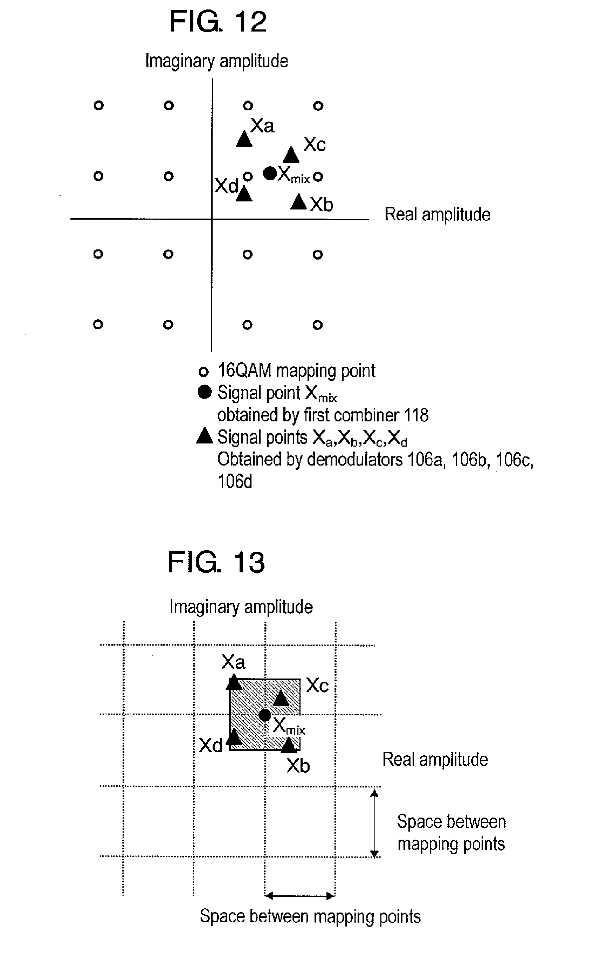

In addition, the reliability of the signals can be judged by the following method. Fig. 12 is a graphic chart showing an example of constellation of mapping points of transmission signals and signal points of received signals obtained as a result of the combining according to the fourth exemplary embodiment of this invention. Fig. 13 is a graphic chart illustrating an example of the method for determining the reliability according to the fourth exemplary embodiment of this invention.

Fig. 12 provides the example in which received signals are 16QAM-modulated, and wherein reception points Xa, Xb, Xc and Xd of the 16QAM signals are shown by dark triangular marks, and that a signal Xmix obtained by the combining process and mapping points of the 16QAM signals are shown by the marks ● and ○ respectively. When signals Xa, Xb, Xc and Xd are input individually from a plurality of demodulators to combiner 118, it obtains a combine signal Xmix by combining these signals according to power ratios or the like data of the careers containing the signals Xa, Xb, Xc and Xd, as marked in Fig. 12.

Fig. 13 shows a shaded area around the combined signal Xmix set as a reference point, and the area covers a range having a distance to the combined signal Xmix, which is shorter than a predetermined value. When the points Xa, Xb, Xc and Xd are included inside the shaded area, as shown in Fig. 13, combiner 118 judges that the reliability of Xmix is high. More concretely, combiner 118 simply judges whether or not absolute values of both a real part and an imaginary part of the difference, Xa-Xmix are smaller than threshold value d. In the example of Fig. 13, the threshold value d is set as to be equal to the distances among the marks of 16 QAM signals.

The threshold value d may be made variable according to receiving conditions of the signals although the value d in this example is set equal to the distances among the marks computed from the career modulation system in order to judge whether the distances of Xa, Xb, Xc and Xd from Xmix are larger or not. For instance, it is also possible to obtain quality data of the received signals computed separately in the demodulator or the like component, and use it as the threshold value d to make judgment of the reliability of the signals. It is also possible to set the threshold value d according to an average amplitude value of noise components contained in the received signals. Again, it is also possible to produce another value for use as the threshold value d by multiplying the average amplitude value of the noise components by a given factor.

Further still, it is also possible to compare a distance between combined signal Xmix and a mapping point of a signal obtained as a result of hard detection of the signal Xmix with the threshold value d. The threshold value d is set to 1/4 of the distances among the marks, for instance, and the reliability of the combine signal is judged high if absolute values of both a real part and an imaginary part of the difference between a result of hard detecting the signal Xmix and the signal Xmix are smaller than the threshold value d.

According to the fourth exemplary embodiment, as described above, the reliability of the received signals is judged by determining whether the results of hard detection of signals Xa, Xb, Xc and Xd input from demodulators 106a, 106b, 106c and 106d respectively are in agreement with one another, or if all of the results of hard detection differ from one another. Presence or absence of the reliability may also be judged by comparing the distances between the signal point of the combined signal and the individual received signals Xa, Xb, Xc and Xd with the threshold value. It is also possible, in addition, to compare a distance between the combined signal Xmix and the mapping point of that signal with the threshold value, without making consideration on the received signals Xa, Xb, Xc and Xd,

In this fourth exemplary embodiment, although what has been described is the configuration provided with four systems comprising the components from the antennas to the demodulators and the propagation path re-estimators, this invention is also adaptable to other configurations having more than four systems, each comprising components from an antenna to a demodulator as well as a propagation path re-estimator. Likewise this is adaptable to configurations having two or more systems, each comprising components from an antenna to a demodulator and a propagation path re-estimator.

In the diversity receiving system which combines the signals received with the plurality of antennas after demodulating them individually, this invention can improve the receiving performance by virtue of the above method, wherein the data of the combine result of the signals is fed back to the plurality of demodulators for use in estimating the propagation path characteristics by the demodulators.

In this case, the first combiner judges the reliability of the signals by using the data of the signal obtained by combining them, so that the first combiner can also perform the interpolating process during re-estimation of the propagation path characteristics by replacing the data of the propagation path characteristics estimated from the pilot signals with another data of the propagation path characteristics obtained from the careers determined to be highly reliable, and inputting them to an interpolation filter or the like component. Also, any propagation path characteristics of the OFDM careers having low reliability may be computed by interpolating with the propagation path characteristics of the adjacent OFDM careers that are determined to be highly reliable.

In the fourth exemplary embodiment, although the description has been provided of the example adaptable for transmission method of OFDM and the digital modulation method of 16QAM mapping, this invention shall not be regarded as limited to this configuration. For instance, the transmission method can be of any type as long as it transmits multi career bearing pilot carriers, instead of limiting it only to the OFDM scheme. In addition, the modulation method can be of any method such as 8QAM, 32QAM, 64QAM, 256QAM, QPSK, and the like.

In the above text, the individual structural components have been illustrated as being adapted to the diversity type combining apparatus by way of an example to embody the present invention. It should be understood, however, that the present invention can also cover a diversity combining method by replacing the functions provided by the individual structural components with the like steps of processing.

### FIFTH EXEMPLARY EMBODIMENT

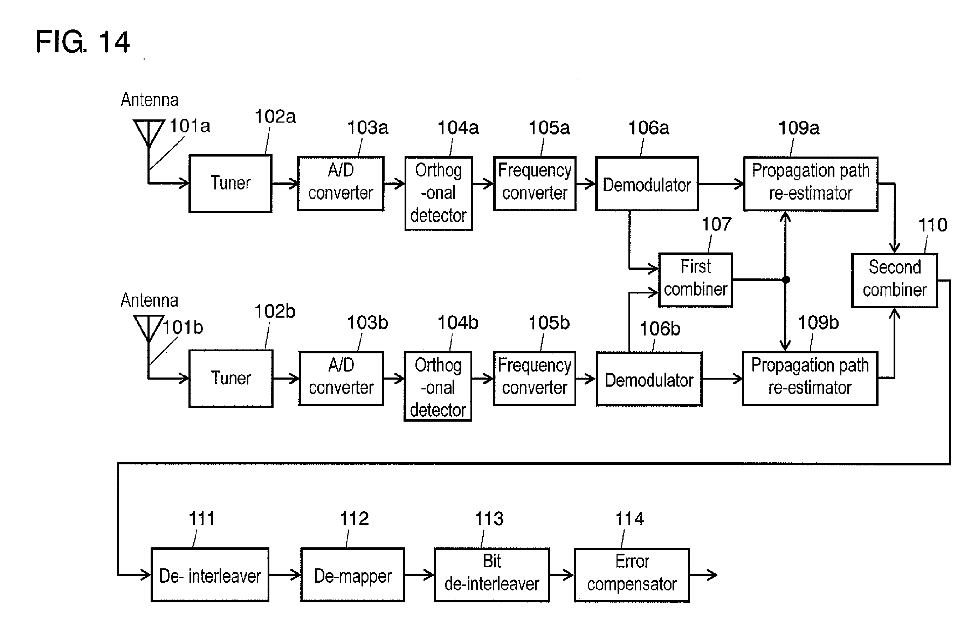

Referring to Fig. 14, description is provided of an example configuration of an apparatus which materializes a diversity receiving system according to the fifth exemplary embodiments of the present invention. Fig. 14 is a block diagram showing a configuration of the diversity receiving apparatus according to the fifth exemplary embodiment of the present invention. In Fig. 14, this fifth exemplary embodiment differs from Fig. 1 in the above-described first exemplary embodiment in respect that this embodiment is not provided with hard detecting unit 108.

In the first exemplary embodiment, hard detecting unit 108 performs the hard detection process on the signals obtained from first combiner 107, and outputs them to propagation path re-estimators 109a and 109b. In the fifth exemplary embodiment, on the other hand, propagation path re-estimators 109a and 109b receive signals output from first combiner 107, as shown in Fig. 14, instead of receiving the signals from hard detecting unit 108 shown in Fig. 1. Propagation path re-estimators 109a and 109b are capable of handling the signals output from first combiner 107 of Fig. 14 and the signals output from hard detecting unit 108 of Fig. 1 in the same manner.

In the fifth exemplary embodiment, hard detecting unit 108 can be eliminated. Although all of the first, second and third exemplary embodiments are provided with hard detecting unit 108, they can be configured so as to eliminate hard detecting unit 108.

In the fifth exemplary embodiment, although the description has been provided of the example adaptable for transmission method of OFDM and the digital modulation method of 16QAM mapping, this invention shall not be regarded as limited to this configuration. For instance, the transmission method can be of any type as long as it transmits multi career bearing pilot carriers, instead of limiting it only to the OFDM scheme. In addition, the modulation method can be of any method such as 8QAM, 32QAM, 64QAM, 256QAM, QPSK, and the like.

In the above text, the individual structural components have been illustrated as being adapted to the diversity type combining apparatus by way of an example to embody the present invention. It should be understood, however, that the present invention can also cover a diversity combining method by replacing the functions provided by the individual structural components with the like steps of processing.

As has been described above, the apparatuses in this patent application perform the processes of receiving the signals modulated and transmitted by the method of digital multilevel modulation with a plurality of antennas, combining the plurality of received signals once when proceeding the diversity process of selecting or combining them, computing a code point, which is close to the transmission code point and most plausible, by performing a hard detection of the combining result, and computing a propagation path characteristic which shifts the transmission code point to the plausible code point. The apparatuses compensate the data of the received signals with respect to one another among the plurality of received signals by once combining these signals, and achieves an improvement of demodulation performances of the individual demodulators by computing the propagation path characteristics once again based on the result.

The apparatuses can also change a number of the feed back processes of the combining result of the signals to any plural number of times, such that they improve estimation accuracy of the propagation path characteristics by repeating the same processes several times, thereby improving the receiving performance even further.

As discussed, the apparatuses can substantially improve the receiving performance of signals since they can compensate the data of the received signals with respect to one another among the plurality of received signals by once combining and hard detecting these signals.

### INDUSTRIAL APPLICABILITY

Application of the present invention can achieve an extremely high receiving performance in a diversity receiving apparatus provided with a plurality of tuners for converting frequency, and demodulators for executing the demodulation process. This invention hence provides a high value of use for diversity receiving apparatuses and a receiving method of the same.

## Claims

1. A diversity combining method for receiving a plurality of input signals modulated by a digital multilevel modulation method and combining the signals, the method comprising:
demodulation step for demodulating the plurality of modulated input signals individually;
first combining step for combining the plurality of signals demodulated in the demodulation step;
hard detection step for performing hard detection of a signal combined in the first combining step and estimating a complex data of a code point;
propagation path re-estimation step for computing a propagation path characteristic for each of signal points by dividing complex data of the plurality of signals demodulated in the demodulation step by a complex data of the code point estimated in the hard detection step; and
second combining step for combining again complex signals obtained by dividing the plurality of signals demodulated in the demodulation step by the propagation path characteristic computed in the propagation path re-estimation step.

2. The diversity combining method of claim 1, wherein the propagation path re-estimation step further comprises a filtering step for subjecting the computed propagation path characteristic to a filtering process.

3. The diversity combining method of claim 2, wherein the filtering process in the filtering step is performed with a low-pass filter.

4. The diversity combining method of claim 1 further comprising:
reliability judgment step for judging reliability of the signal combined in the first combining step; and
compensation step for compensating the propagation path characteristic computed in the propagation path re-estimation step based on the reliability provided as a result of judgment in the reliability judgment step.

5. The diversity combining method of claim 4, wherein the reliability judgment step makes a judgment that reliability is low when a distance between the signal points among the individual signals subjected to combining in the first combining step exceeds a predetermined threshold value, and
the propagation path re-estimation step replaces the computed propagation path characteristic with another value based on the propagation path characteristics of the signals adjacent to the individual signals subjected to the combining along a direction of any of a frequency axis and a time axis, upon the judgment in the reliability judgment step that the reliability is low.

6. The diversity combining method of claim 4, wherein the reliability judgment step makes a judgment that reliability of the signal combined in the first combining step is high when the signal point obtained by hard detection in the hard detection step is in agreement with the individual signals subjected to the combining in the first combining step.

7. The diversity combining method of claim 4, wherein the reliability judgment step computes a distance between each of the signals subjected to the combining in the first combining step and the signal resulted by the combining in the first combining step, and makes a judgment that reliability of the combined signal is high when the distance between the combined signal and each of the signals subjected to the combining is smaller than a predetermined threshold value.

8. The diversity combining method of claim 1, wherein the method is **characterized by** repeating the hard detection processing step to the second combining step for a predetermined number of times on the complex signal combined again in the second combining step.

9. The diversity combining method of claim 1, wherein the propagation path re-estimation step computes the propagation path characteristic for each of the signal points by dividing the complex data of the plurality of signals demodulated in the demodulation step by a complex data based on reference signals provided with a specified amplitude and phase and arranged at predetermined intervals in directions along a frequency axis and a time axis of the input signals.

10. A diversity combining method for receiving a plurality of input signals modulated by a digital multilevel modulation method and combining the signals, the method comprising:
demodulation step for demodulating the plurality of modulated input signals individually;
first combining step for combining the plurality of signals demodulated in the demodulation step;
propagation path re-estimation step for computing a propagation path characteristic for each of signal points by dividing complex data of the plurality of signals demodulated in the demodulation step by a complex data of a code point combined in the first combining step; and
second combining step for combining again complex signals obtained by dividing the plurality of signals demodulated in the demodulation step by the propagation path characteristic computed in the propagation path re-estimation step.

11. The diversity combining method of claim 10, wherein the propagation path re-estimation step further comprises a filtering step for subjecting the computed propagation path characteristic to a filtering process.

12. The diversity combining method of claim 11, wherein the filtering process in the filtering step is performed with a low-pass filter.

13. The diversity combining method of claim 10 further comprising:
reliability judgment step for judging reliability of the signal combined in the first combining step; and
compensation step for compensating the propagation path characteristic computed in the propagation path re-estimation step based on the reliability provided as a result of judgment in the reliability judgment step.

14. The diversity combining method of claim 13, wherein the reliability judgment step makes a judgment that reliability is low when a distance between the signal points among the individual signals subjected to combining in the first combining step exceeds a predetermined threshold value, and
the propagation path re-estimation step replaces the computed propagation path characteristic with another value based on the propagation path characteristics of the signals adjacent to the individual signals subjected to the combining along a direction of any of a frequency axis and a time axis, upon the judgment in the reliability judgment step that the reliability is low.

15. The diversity combining method of claim 13, wherein the reliability judgment step computes a distance between each of the signals subjected to the combining in the first combining step and the signal resulted by the combining in the first combining step, and makes a judgment that reliability of the combined signal is high when the distance between the combined signal and each of the signals subjected to the combining is smaller than a predetermined threshold value.

16. The diversity combining method of claim 10, wherein the method is **characterized by** repeating the propagation path re-estimation step to the second combining step for a predetermined number of times on the complex signal combined again in the second combining step.

17. The diversity combining method of claim 10, wherein the propagation path re-estimation step computes the propagation path characteristic for each of the signal points by dividing the complex data of the plurality of signals demodulated in the demodulation step by a complex data based on reference signals provided with a specified amplitude and phase and arranged at predetermined intervals in directions along a frequency axis and a time axis of the input signals.

18. A diversity receiving apparatus for receiving a plurality of input signals modulated by a digital multilevel modulation method and combining the signals, the apparatus comprising:
a demodulator for demodulating individually the plurality of modulated input signals;
a first combiner for combining the plurality of signals demodulated by the demodulator;
a hard detecting unit for estimating a complex data of a code point by performing a hard detection of a signal combined by the first combiner, and outputting a result thereof;
a propagation path re-estimator for computing a propagation path characteristic for each of signal points by dividing complex data of the plurality of signals demodulated by the demodulator by a complex data of the code point output by the hard detecting unit; and
a second combiner for combining again complex signals obtained by dividing the plurality of signals demodulated by the demodulator by the propagation path characteristic output by the propagation path re-estimator.

19. The diversity receiving apparatus of claim 18, wherein the propagation path re-estimator further comprises a filter for making a filtering process and outputting the computed propagation path characteristic.

20. The diversity receiving apparatus of claim 19, wherein the filter comprises a low-pass filter.

21. The diversity receiving apparatus of claim 18 further comprising:
a reliability judging unit for judging reliability of the signal combined by the first combiner; and
a compensator for compensating the propagation path characteristic computed by the propagation path re-estimator based on a result of the reliability judgment output by the reliability judging unit.

22. The diversity receiving apparatus of claim 21, wherein the reliability judging unit makes a judgment that reliability is low when a distance between the signal points among the individual signals subjected to combining by the first combiner exceeds a predetermined threshold value, and
the propagation path re-estimator replaces the computed propagation path characteristic with another value based on the propagation path characteristics of the signals adjacent to the individual signals subjected to the combining along a direction of any of a frequency axis and a time axis when the reliability judging unit outputs the result of judgment that the reliability is low.

23. The diversity receiving apparatus of claim 21, wherein the reliability judging unit makes a judgment that reliability of the signal combined by the first combiner is high when results of the hard detection made by the hard detecting unit on the individual signals subjected to the combining by the first combiner are in agreement with one another.

24. The diversity receiving apparatus of claim 21, wherein the reliability judging unit computes a distance between each of the signals subjected to the combining by the first combiner and the signal combined by the first combiner, and makes a judgment that reliability of the combined signal is high when the distance between the combined signal and each of the signals subjected to the combining is smaller than a predetermined threshold value.

25. The diversity receiving apparatus of claim 18, wherein the apparatus inputs the complex signal output by the second combiner to the hard detecting unit, and repeats a process of computing the propagation path characteristic by the propagation path re-estimator up to a process of re-combining by the second combiner on the complex signal for a predetermined number of times.

26. The diversity receiving apparatus of claim 18, wherein the propagation path re-estimator computes and outputs the propagation path characteristic for each of the signal points by dividing the complex data of the plurality of signals demodulated by the demodulator by a complex data based on reference signals provided with a specified amplitude and phase and arranged at predetermined intervals in directions along a frequency axis and a time axis of the input signals.

27. A diversity receiving apparatus for receiving a plurality of input signals modulated by a digital multilevel modulation method and combining the signals, the apparatus comprising:
a demodulator for demodulating individually the plurality of modulated input signals;
a first combiner for combining the plurality of signals demodulated by the demodulator;
a propagation path re-estimator for computing a propagation path characteristic for each of signal points by dividing complex data of the plurality of signals demodulated by the demodulator by a complex data of a code point output from the first combiner; and
a second combiner for combining again complex signals obtained by dividing the plurality of signals demodulated by the demodulator by the propagation path characteristic output from the propagation path re-estimator.

28. The diversity receiving apparatus of claim 27, wherein the propagation path re-estimator further comprises a filter for making a filtering process and outputting the computed propagation path characteristic.

29. The diversity receiving apparatus of claim 28, wherein the filter comprises a low-pass filter.

30. The diversity receiving apparatus of claim 27 further comprising:
a reliability judging unit for judging reliability of the signal combined by the first combiner; and
a compensator for compensating the propagation path characteristic computed by the propagation path re-estimator based on a result of the reliability judgment output by the reliability judging unit.

31. The diversity receiving apparatus of claim 30, wherein the reliability judging unit makes a judgment that reliability is low when a distance between the signal points among the individual signals subjected to combining by the first combiner exceeds a predetermined threshold value, and
the propagation path re-estimator replaces the computed propagation path characteristic with another value based on the propagation path characteristics of the signals adjacent to the individual signals subjected to the combining along a direction of any of a frequency axis and a time axis when the reliability judging unit outputs the result of judgment that the reliability is low.

32. The diversity receiving apparatus of claim 30, wherein the reliability judging unit computes a distance between each of the signals subjected to the combining by the first combiner and the signal combined by the first combiner, and makes a judgment that reliability of the combined signal is high when the distance between the combined signal and each of the signals subjected to the combining is smaller than a predetermined threshold value.

33. The diversity receiving apparatus of claim 27, wherein the apparatus repeats a process of computing the propagation path characteristic by the propagation path re-estimator and a process of re-combining by the second combiner on the complex signal output by the second combiner for a predetermined number of times.

34. The diversity receiving apparatus of claim 27, wherein the propagation path re-estimator computes and outputs the propagation path characteristic for each of the signal points by dividing the complex data of the plurality of signals demodulated by the demodulator by a complex data based on reference signals provided with a specified amplitude and phase and arranged at predetermined intervals in directions along a frequency axis and a time axis of the input signals.
